# EUROPEAN PATENT APPLICATION

(11) **EP 1 116 750 A1**
(43) Date of publication of application: **18.07.2001**
(21) Application number: 99931552.6
(22) Date of filing: 27.07.1999
(51) Int. Cl.: C08L 67/02, C08L 69/00, C08L 25/00, C08L 33/10

(54) **THERMOPLASTIC RESIN COMPOSITION**

(30) Priority: 28.07.1998 JP 21246198
(71) Applicant: Mitsubishi Engineering-Plastics Corporation, Tokyo 104-0031 (JP)
(72) Inventor: KANAYAMA, Satoshi, Mitsubishi Engin.-Plastics Corp, Hiratsuka-shi, Kanagawa 254-0016 (JP); HATAKEYAMA, Tatsuhiko, Mitsubishi Engin.-Plastics, Hiratsuka-shi, Kanagawa 254-0016 (JP); MIYA, Shinya, Mitsubishi Engineering-Plastics Corp, Hiratsuka-shi, Kanagawa 254-0016 (JP); NARITA, Kenichi, Mitsubishi Engin.-Plastics Corp., Hiratsuka-shi, Kanagawa 254-0016 (JP)
(74) Representative: HOFFMANN - EITLE
(86) International application number: JP9904007
(87) International publication number: WO0006647

(57) **Abstract**

A thermoplastic resin composition comprising:
a transparent aromatic thermoplastic resin (a) and
a copolymer polyester resin (b) comprising at least two kinds of dicarboxylic acid moieties and one kind of diol moiety, 1 to 50 mol% of the dicarboxylic acid moieties being a naphthalenedicarboxylic acid moiety,
the ratio of (a) to the combined amount of (a) and (b) being 50 to 99.99% by weight, and the ratio of (b) being 0.01 to 50% by weight.

The above thermoplastic resin composition is characterized in that it is transparent and has, among others, excellent chemical resistance and heat resistance.

## Description

### Technical Field

The present invention relates to a thermoplastic resin composition, more particularly, relates to a thermoplastic resin composition comprising a transparent aromatic thermoplastic resin such as polycarbonate resins and a specific copolymer polyester resin.

### Background Art

Thermoplastic resins, especially engineering plastics, are used for a variety of purposes because of their excellent mechanical strength and impact resistance. These resins, however, have their own problems. For example, polyester resins, although excellent in chemical resistance, etc., are not necessarily satisfactory in heat resistance, while polycarbonate resins, though possessed of high transparency and heat resistance, are poor in chemical resistance, and thus for such reasons, these thermoplastic resins have been limited in their scope of use.

Hitherto, various proposals involving blending of various types of resins have been made for the improvement of chemical resistance of polycarbonate resins. For instance, Japanese Patent Publication (KOKOKU) No. 36-14035 discloses a thermoplastic material produced by melting and mixing polyethylene terephthalate and a polycarbonate, and Japanese Patent Application Laid-Open (KOKAI) No. 48-96646 discloses a polycarbonate composition containing polytetramethylene naphthalate and/or polyhexamethylene naphthalate, but these products have the disadvantage of being low in transparency.

A resin composition comprising a polycarbonate and polytetramethylene terephthalate is disclosed in Japanese Patent Application Laid-Open (KOKAI) No. 48-54160, but this composition has the problem that its transparency is impaired, though improved in chemical resistance, when the content of polytetramethylene type phthalate is increased. It is thus difficult with this Laid-Open (KOKAI) to obtain a thermoplastic resin composition which is transparent and also excels in chemical and heat resistance.

Accordingly, an object of the present invention is to provide a thermoplastic resin composition which is transparent and yet has excellent chemical resistance, heat resistance, etc., and which comprises a transparent thermoplastic resin such as a polycarbonate resin and a specific copolymer polyester resin.

### Disclosure of the Invention

In an aspect of the present invention, there is provided a thermoplastic resin composition comprising:
a transparent aromatic thermoplastic resin (a) and
a copolymer polyester resin (b) comprising at least two kinds of dicarboxylic acid moieties and one kind of diol moiety, 1 to 50 mol% of the dicarboxylic acid moieties being a naphthalenedicarboxylic acid moiety,
the ratio of (a) to the combined amount of (a) and (b) being 50 to 99.99% by weight, and the ratio of (b) being 0.01 to 50% by weight.

The present invention will be explained in detail below. First, explanation is made on the transparent aromatic thermoplastic resins usable as component (a) in the present invention. The "transparent aromatic thermoplastic resins" referred in the present invention designate the thermoplastic resins which have an aromatic ring in the molecule and exhibit a high light transmittance in the visible light range. To put it in a more concrete way, the said transparent aromatic thermoplastic resins are the ones which, when molded into a 3 mm thick product, show a visible light transmittance of not less than 80% as measured according to JIS R 3106. As such transparent aromatic thermoplastic resins, polycarbonate resins, polyarylate resins, polystyrene resins, AS resins and the like are preferably used, but other types of resins such as MS resins, transparent ABS resins, polysulfone resins, polyether sulfone resins, transparent polyamide resins, etc., are also usable. The transparent aliphatic thermoplastic resins such as methacrylic resins are reduced in transparency when a copolymer polyester resin (b) such as mentioned later is blended.

The polycarbonate resins include polymers or copolymers of the thermoplastic aromatic polycarbonates obtained by reacting aromatic dihydroxyl compounds or these compounds plus a small quantity of polyhydroxyl compounds with phosgene or a carbonic acid diester. Such polycarbonates may be branched.

The aromatic dihydroxyl compounds include bis(hydroxyaryl)alkanes such as 2,2-bis(4-hydroxyphenyl)propane (bisphenol A);, 2,2-bis(3,5-dibromo-4-hydroxyphenyl)propane (tetrabromobisphenol A), bis(4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxy-3-methylphenyl)propane, 1,1-bis(3-t-butyl-4-hydroxyphenyl)propane, 2,2-bis(4-hydroxy-3,5-dimethylphenyl)propane, 2,2-bis(3-bromo-4-hydroxyphenyl)propane, 2,2-bis(3,5-dichloro-4-hydroxyphenyl)propane, 2,2-bis(3-phenyl-4-hydroxyphenyl)propane, 2,2-bis(3-cyclohexyl-4-hydroxyphenyl)propane, 1,1-bis(4-hydroxyphenyl)-1-phenylethane, and bis(4-hydroxyphenyl)diphenylmethane; bis(hydroxyaryl)cycloalkanes such as 1,1-bis(4-hydroxyphenyl)cyclopentane, 1,1-bis(4-hydroxyphenyl)cyclohexane, and 1,1-bis(4-hydroxyphenyl)-3,3,5-trimethylcyclohexane; dihydroxydiaryl ethers such as 4,4'-dihydroxydiphenyl ether and 4,4'-dihydroxy-3,3'-dimethyldiphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; dihydroxydiaryl sulfones such as 4,4'-dihydroxydiphenyl sulfone and 4,4'-dihydroxy-3,3'-dimethyldiphenyl sulfone; hydroquinone, resorcin, 4,4'-dihydroxydiphenyl and the like. If necessary these aromatic dihydroxyl compounds may be used as a mixture of two or more of them. Of these compounds, 2,2-bis(4-hydroxyphenyl)propane is especially preferred.

For obtaining the branched aromatic polycarbonate resins, polyhydroxyl compounds such as phloroglucin, 2,6-dimethyl-2,4,6-tris(4-hydroxyphenyl)-3-heptene, 4,6-dimethyl-2,4,6-tris(4-hydroxyphenyl)-2-heptene, 1,3,5-tris(2-hydroxyphenyl)benzole, 1,1,1-tris(4-hydroxyphenyl)ethane, 2,6-bis(2-hydroxy-5-methylbenzyl)-4-methylphenol, and α, α', α''-tris(4-hydroxyphenyl)-1,3,5-triisopropylbenzene; 3,3-bis(4-hydroxyaryl)oxyindole (isatinbisphenol), 5-chloroisatinbisphenol, 5,7-dichloroisatinbisphenol, 5-bromoisatinbisphenol and the like, may be used.

In the case of phosgene process polycarbonates, a terminator or a molecular weight modifier may be used. As such a terminator or molecular weight modifier, there can be used the compounds having monovalent phenolic hydroxyl groups, which include, beside ordinary phenols such as p-t-butylphenol and tribromophenol, long-chain alkylphenols, aliphatic carboxylic acid chloride, aliphatic carboxylic acids, aromatic carboxylic acids, hydroxybenzoic acid alkyl esters, alkyl ether phenols and the like. In the case of the polycarbonate resins used in the present invention, these terminators or molecular weight modifiers may be used if necessary as a mixture of two or more of them.

The polyarylates in the present invention are the whole aromatic polyester resins comprising aromatic dicarboxylic acids and divalent phenols. Examples of the said aromatic dicarboxylic acids include terephthalic acid, isophthalic acid and the mixture thereof. A typical example of the said divalent phenols is bisphenol A. A whole aromatic polyester comprising terephthalic acid/isophthalic acid and bisphenol A is preferably used.

The polystyrenes in the present invention include, for example, single polymers obtained by polymerizing the styrene monomers. When the polystyrenes are obtained by polymerizing the styrene monomers, styrene-based monomers such as α-methylstyrene and p-methylstyrene may be partly used. Various polymerization methods such as emulsion polymerization, solution polymerization, suspension polymerization, bulk polymerization, etc., can be used for producing the said polystyrenes. The weight-average molecular weight of these polystyrenes, which can be determined, for example, by the light scattering method, is usually around 100,000 to 500,000.

The AS resins in the present invention are the random copolymers of acrylonitrile and styrenes, which can be obtained in the same way as the polymerization of polystyrenes.

Molecular weight of the transparent aromatic thermoplastic resin (a), determined as viscosity-average molecular weight converted from the solution viscosity measured in methylene chloride at 25 °C, is usually 10,000 to 100,000, preferably 15,000 to 50,000. Polycarbonate resins are especially preferably used as the transparent aromatic thermoplastic resin.

Next, the copolymer polyester resins usable as component (b) in the present invention are explained. In the present invention, there is used a copolymer polyester resin comprising at least two kinds of dicarboxylic acid moieties and one kind of diol moiety, in which 1 to 50 mol% of the whole dicarboxylic acid moiety is a naphthalenedicarboxylic acid. A method for obtaining such a copolymer polyester resin comprises copolymerizing a naphthalenedicarboxylic acid and a dicarboxylic acid other than naphthalenedicarboxylic acid with a diol. In place of the naphthalenedicarboxylic acid and/or the said other dicarboxylic acid, ester-forming derivatives of thereof may be used.

As the naphthalenedicarboxylic acid, isomers of various naphthalenedicarboxylic acids such as 2,6-naphthalenedicarboxylic acid, 2,7-naphthalenedicarboxylic acid, 2,3-naphthalenedicarboxylic acid, 1,8-naphthalenedicarboxylic acid, 1,7-naphthalenedicarboxylic acid, 1,6-naphthalenedicarboxylic acid, 1,5-naphthalenedicarboxylic acid, 1,4-naphthalenedicarboxylic acid, 1,3-naphthalenedicarboxylic acid and 1,2-naphthalenedicarboxylic acid can be used. These naphthalenedicarboxylic acid isomers may be used as a mixture of two or more of them. Of these naphthalenedicarboxylic acids, 2,6-naphthalenedicarboxylic acid is especially preferred.

As the dicarboxylic acid other than naphthalenedicarboxylic acids, there can be used, for example, aromatic dicarboxylic acids, alicyclic dicarboxylic acids, aliphatic dicarboxylic acids and oxyacids, of which aromatic dicarboxylic acids are preferred. Examples of such aromatic dicarboxylic acids include phthalic acid, isophthalic acid, terephthalic acid, diphenyldicarboxylic acid, diphenoxyethanedicarboxylic acid, diphenyl ether dicarboxylic acid, and diphenyl ether dicarboxylic acid.

The alicyclic dicarboxylic acids include nuclear hydrogenation compounds of the said aromatic dicarboxylic acids, such as hexahydroterephthalic acid and hexahydroisophthalic acid. The aliphatic dicarboxylic acids include succinic acid, glutamic acid, adipic acid, suberic acid, azelaic acid, sebacic acid, and dodecanedionoic acid. The oxyacids include hydroxybenzoic acid and hydroxycaproic acid. These dicarboxylic acids may be used as a mixture of two or more of them as desired. Of these dicarboxylic acids, phthalic acid, isophthalic acid and terephthalic acid are preferred, terephthalic acid being especially preferred.

The diols include aliphatic diols, alicyclic diols, aromatic diols and ethylene oxide aducts of aromatic diols. Aliphatic diols are preferred. Examples of such aliphatic diols include ethylene glycol, 1,2-propanediol, 1,3-propanediol, 1,4-butanediol, 1,5-pentanediol, 1,6-hexanediol, 1,2-decanediol, 1,10-decanediol and neopentyl glycol.

Examples of the alicyclic diols include polyalkylene glycols such as diethylene glycol, triethylene glycol, polyethylene glycol, polypropylene glycol, and polytetramethylene glycol; 1,2-cyclohexanediol, 1,4-cyclohexanediol, 1,1-cyclohexanedimethanol, 1,4-cyclohexanedimethanol and the like. Examples of the aromatic diols include 2,2-bis(4-hydroxyphenyl)propane, bis(4-hydroxyphenyl)methane, 1,1-bis(4-hydroxyphenyl)ethane, 2,2-bis(4-hydroxy-3-methylphenyl)propane, 1,1-bis(4-hydroxyphenyl)-1-phenylethane, and 1,1-bis(4-hydroxyphenyl)cyclohexane.

Examples of the ethylene oxide adducts of aromatic diols include 2,2-bis(4-β-hydroxyethoxyphenyl)propane and bis(4-β-hydroxyethoxyphenyl)sulfone. These diols may be used as a mixture of two or more of them. Of these diols, ethylene glycol and 1,4-butanediol are preferred, ethylene glycol being especially preferred.

In the copolymer polyester resin (b), the percentage of naphthalenedicarboxylic acid in the dicarboxylic acid moieties is 1 to 50 mol%. If this percentage is less than 1 mol%, the effect of improving chemical resistance is unsatisfactory. If the percentage exceeds 50 mol%, the composition deteriorates in transparency. The lower limit of the percentage of naphthalenedicarboxylic acid in the dicarboxylic acid moiety is preferably not less than 2 mol%, more preferably not less than 4 mol%, even more preferably not less than 6 mol%. The upper limit of the percentage of naphthalenedicarboxylic acid in the dicarboxylic acid moieties is preferably not more than 40 mol%, more preferably not more than 25 mol%.

Molecular weight of the copolymer polyester resin (b) is not specifically defined in the present invention, but when it is expressed in terms of intrinsic viscosity measured in a 5/5 mixed solvent of tetrachloroethane and phenol at 30 °C, it is usually 0.3 to 2.0 dl/g, preferably 0.4 to 1.5 dl/g, more preferably 0.5 to 1.4 dl/g.

The ratios of transparent thermoplastic resin (a) and copolymer polyester resin (b) to the combined amount of both resins (a) and (b), are as follows: (a)/(a) + (b) = 50 to 99.99% by weight and (b)/(a) + (b) = 0.01 to 50% by weight. If the ratio of copolymer polyester resin (b) is less than 0.01% by weight, the chemical resistance improving effect is unsatisfactory, and if this ratio exceeds 50% by weight, the composition becomes unsatisfactory in heat resistance. The lower limit of the ratio of copolymer polyester resin (b) is preferably not less than 0.1% by weight, more preferably not less than 0.2% by weight, even more preferably not less than 0.5% by weight. The upper limit of the ratio of copolymer polyester resin (b) is preferably not more than 45% by weight.

The thermoplastic resin composition of the present invention can be produced, for example, by a method in which the component resins are blended and kneaded in the various ways known to those skilled in the art at any suitable stage in the process till the point just before final molding. Blending can be effected in the various ways, such as using a suitable mixer like tumbler or Henschel mixer, or supplying the determined amounts of resins to the extruder hopper by a feeder and mixing them. Kneading can be accomplished, for example, by a method using a single- or double-screw extruder.

The thermoplastic resin composition of the present invention may contain, depending on the purpose of its use, other polymers for affording the desired extra properties, flame-retardant, impact modifier, antioxidant, thermal stabilizer, UV absorber, antistatic agent, plasticizer, release agent, lubricant, compatibilizing agent, foaming agent, reinforcing agents and fillers such as glass fiber, glass beads, glass flakes, carbon fiber, fibrous magnesium, potassium titanate whisker, ceramic whisker, mica, talc, etc, and colorants, etc. These compounds may be used singly or in the mixture of two or more.

The thermoplastic resin composition of the present invention can be molded into desired products by the conventionally used molding methods such as injection molding and blow molding. The molded products obtained from the thermoplastic resin composition of the present invention can be applied to a variety of commercial products, such as sheets, films, miscellaneous goods, parts of household electric appliances, automobile parts, building materials, hollow containers, etc., more specifically, roof panels for arcades, carports, indoor swimming pools, etc., light-transmitting molded articles such as sign boards, switch buttons, indicator buttons, indicator panels, meter panels, etc., delineators, signal lamps, sound insulating walls, automobile parts such as door window, rear quarter window, sunroof, rear panel garnish, headlight lens, tail lamp, etc., railroad light covers, camera lens, telephone jack, relay cover, terminal block cover, solar battery housing, water tank of iron, control box, pachinko ball case, ornamental jigs, ski goggles, protective spectacles, protective masks, artificial dialyzer, artificial lung case and its cap and connector, mineral water bottle, street lamp cover, etc.

Haze of the molded products obtained from the thermoplastic resin composition of the present invention, as determined with a 3 mm thick test piece, is ordinarily not more than 17%, preferably not more than 15%, more preferably not more than 10%. Deflection temperature under load of the molded pieces obtained from the thermoplastic resin composition of the present invention is generally not lower than 90 °C, preferably not lower than 100 °C.

### Best Mode for Carrying out the Invention

The present invention will be further illustrated by the following examples, but it should be understood that these examples are merely intended to be illustrative and not to be construed as limiting the scope of the invention. The materials and the evaluation methods used in the following Examples are as described below.

### <Transparent thermoplastic resins>

(1) Polycarbonate resin: "IUPILON S-2000" (viscosity-average molecular weight: 25,000) produced by Mitsubishi Engineering-Plastics Corporation.
(2) Polyarylate resin: "U Polymer U-100" produced by UNITIKA Ltd.
(3) Polystyrene resin: "Diarex HH-102" produced by A & M Styrene Co., Ltd.
(4) Refractory styrene-based resin: "Dylark #232" (hereinafter abbreviated as "D-232") produced by Sekisui Chemical Industries Co., Ltd.
(5) Methacrylic resin: "Acrypet VH" produced by Mitsubishi Rayon Co., Ltd.

### <Polyester resins (for Examples)

(1) Copolymer polyester resin: "Novapex NC102Z" produced by Mitsubishi Chemical Corporation, a polyethylene terephthalate resin obtained by copolymerizing 8 mol% of naphthalenedicarboxylic acid, intrinsic viscosity: 0.81
(2) Copolymer polyester resin: "N10PET" produced by Mitsubishi Chemical Corporation, a polyethylene terephthalate resin obtained by copolymerizing 10 mol% of naphthalendicarboxylic acid, intrinsic viscosity: 0.80
(3) Copolymer polyester resin: "N31PET" produced by Mitsubishi Chemical Corporation., a polyethylene terephthalate resin obtained by copolymerizing 31 mol% of naphthalenedicarboxylic acid, intrinsic viscosity: 0.50

### <Polyester resins (for Comparative Examples)>

(1) Polyethylene terephthalate resin: "Novapex GS400" produced by Mitsubishi Chemical Corporation, intrinsic viscosity: 0.70
(2) Copolymer polyester resin: "Novapex NC900Z" produced by Mitsubishi Chemical Corporation, a polyethylene terephthalate resin obtained by copolymerizing 92 mol% of naphthalenedicarboxylic acid, intrinsic viscosity: 0.61 Polyester resin: "Novapex FS405Z" produced by Mitsubishi Chemical Corporation, a polyethylene naphthalate resin, intrinsic viscosity: 0.70

### <Evaluation methods>

(1) Transparency: Haze was measured using 3 mm thick test pieces.
(2) Deflection temperature under load: Determined according to ASTM D648 under a load of 1.82 MPa.
(3) Chemical resistance (1): Testing chemicals were applied on a 3.2 mm thick tensile test piece in the state of being loaded with a strain with a deformation rate of 1%, and 48 hours later, the breaking energy retention ratio (ratio to the piece to which no testing chemical was applied) was determined. The testing chemicals used are:
   (a) PEG400: polyethylene glycol (produced by Nippon Yushi KK)
   (b) DOP: dioctyl phthalate (di(2-ethylhexyl) phthalate) (produced by Tokyo Chemical Industries Co., Ltd.)
   (c) TCP: tricresyl phosphate (produced by Tokyo Chemical Industries Co., Ltd.)
(4) Chemical resistance (2): 3.0 mm thick test pieces were immersed in the testing chemicals for 24 hours, and then the change of external appearance of the test pieces was visually examined. The following chemicals (a) and (b) were used for the test. Evaluation was made according to the following three-rank rating system.

### Testing chemicals

(1) TCP: tricresyl phosphate (produced by Tokyo Chemical Industries Co., Ltd.)
(2) ENK: ethyl nonyl ketone (3-decanone) (produced by Tokyo Chemical Industries Co., Ltd.)

### Evaluation

○: No change.
Δ: Became slightly cloudy or swollen.
·: Became completely cloudy or swollen.

### Examples 1 to 8 and Comparative Examples 2 to 5

A polycarbonate resin (S-2000) and the polyester resins shown in Table 1 were mixed in the ratios shown in the same table by a tumbler and extruded by a 40 mmφ single-screw vent type extruder at a barrel temperature of 270 °C to obtain pellets. These pellets were dried by a hot air drier at 120 °C for not less than 5 hours and injection molded at a resin temperature of 270 °C and a mold temperature of 80 °C to make the test pieces for determining properties. Results of the evaluation tests are shown in Table 1.

### Comparative Example 1

A polycarbonate resin (S-2000) was dried by a hot air drier at 120 °C for more than 5 hours and then injection molded in the same way as in Example 1 to make a test piece. Results of the evaluation tests are shown in Table 1. Examples 9 and 10 and Comparative Example 6

A polyarylate resin (U-100) and a copolymer polyester resin (NC-102Z) shown in Table 2 were mixed in the ratios shown in the same table by a tumbler and extruded by a 30 mmφ double-screw vent type extruder at a barrel temperature of 360 °C to obtain pellets. In Comparative Example 6, pellets were molded from the polyarylate resin alone. These pellets were dried by a hot air dryer at 120 °C for 9 hours and then injection molded at a resin temperature of 360 °C and a mold temperature of 120 °C to make the test pieces for determining properties. Results of the evaluation tests are shown in Table 2.

### Example 11 and Comparative Example 7

A polystyrene resin (HH-102) and a copolymer polyester resin (NC-102Z) shown in Table 2 were mixed in the ratios shown in the same table by a tumbler and extruded by a 30 mmφ double-screw vent type extruder at a barrel temperature of 260 °C to obtain pellets. In Comparative Example 7, pellets were molded from the polystyrene resin alone. These pellets were dried by a hot air drier at 80 °C for 3 hours and then injection molded at a resin temperature of 260 °C and a mold temperature of 40 °C to make the test pieces for determining properties. Results of the evaluation tests are shown in Table 2.

### Examples 12 and 13 and Comparative Example 8

A refractory polystyrene resin (D-232) and a copolymer polyester resin (NC-102Z) shown in Table 2 were mixed in the ratios shown in the same table by a tumbler and extruded by a 30 mmφ double-screw vent type extruder at a barrel temperature of 260 °C to obtain pellets. In Comparative Example 8, pellets were molded from the refractory polyester resin alone. These pellets were dried by a hot air drier at 90 °C for 3 hours and injection molded at a resin temperature of 260 °C and a mold temperature of 60 °C to make the test pieces for determining properties. Results of the evaluation tests are shown in Table 2.

### Comparative Examples 9 and 10

A methacrylic resin (VH) and a copolymer polyester resin (NC-102Z) shown in Table 2 were mixed in the ratios shown in the same table by a tumbler and extruded by a 30 mmφ double-screw vent type extruder at a barrel temperature of 260 °C to obtain pellets. In Comparative Example 9, pellets were molded from the methacrylic resin alone. These pellets were dried by a hot air drier at 90 °C for 5 hours and injection molded at a resin temperature of 260 °C and a mold temperature of 60 °C to make the test pieces for determining properties. Results of the evaluation tests are shown in Table 2.

**Table 1**

| | Transparent thermoplastic resin | | Polyester resin | |
|---|---|---|---|---|
| | Type | Blending ratio (WT%) | Type | Blending ratio (WT%) |
| Example 1 | S-2000 | 99 | NC102Z | 1 |
| Example 2 | S-2000 | 90 | NC102Z | 10 |
| Example 3 | S-2000 | 80 | NC102Z | 20 |
| Example 4 | S-2000 | 70 | NC102Z | 30 |
| Example 5 | S-2000 | 50 | NC102Z | 50 |
| Example 6 | S-2000 | 99.75 | NC102Z | 0.25 |
| Example 7 | S-2000 | 99 | N10PET | 1 |
| Example 8 | S-2000 | 99 | N31PET | 1 |
| Comp. Example 1 | S-2000 | 100 | - | 0 |
| Comp. Example 2 | S-2000 | 90 | GS400 | 10 |
| Comp. Example 3 | S-2000 | 90 | NC900Z | 10 |
| Comp. Example 4 | S-2000 | 25 | NC102Z | 75 |
| Comp. Example 5 | S-2000 | 90 | FS405Z | 10 |

**Table 1 (Continued)**

| | Haze (%) | Deflection temperature under load (°C) | Chemical resistance (1) Breaking energy retention (%) | | |
|---|---|---|---|---|---|
| | | | PEG 400 | DOP | TCP |
| Example 1 | 0.6 | 135 | 87 | 84 | 78 |
| Example 2 | 1.7 | 133 | 93 | 81 | 94 |
| Example 3 | 4.9 | 130 | 84 | 49 | 72 |
| Example 4 | 7.4 | 127 | 22 | 98 | 97 |
| Example 5 | 8.9 | 114 | - | - | - |
| Example 6 | 0.3 | 136 | 87 | 78 | 89 |
| Example 7 | 0.3 | 136 | 32 | 95 | 94 |
| Example 8 | 0.7 | 136 | - | - | - |
| Comp. Example 1 | 0.4 | 136 | 2 | 12 | 50 |
| Comp. Example 2 | 18.1 | 132 | 39 | 57 | 93 |
| Comp. Example 3 | 91.5 | 135 | 90 | 86 | 90 |
| Comp. Example 4 | 6.1 | 81 | 17 | 20 | 13 |
| Comp. Example 5 | 92.0 | 134 | 2 | 36 | 99 |

**Table 2**

| | Transparent thermoplastic resin | | Polyester resin | |
|---|---|---|---|---|
| | Type | Blending ratio (WT%) | Type | Blending ratio (WT%) |
| Example 9 | U-100 | 90 | NC102Z | 10 |
| Example 10 | U-100 | 99 | NC102Z | 1 |
| Example 11 | HH-102 | 99 | NC102Z | 1 |
| Example 12 | D-232 | 90 | NC102Z | 10 |
| Example 13 | D-232 | 99 | NC102Z | 1 |
| Comp. Example 6 | U-100 | 100 | - | - |
| Comp. Example 7 | HH-102 | 100 | - | - |
| Comp. Example 8 | D-232 | 100 | - | - |
| Comp. Example 9 | VH | 100 | - | - |
| Comp. Example 10 | VH | 99 | NC102Z | 1 |

**Table 2 (Continued)**

| | Haze (%) | Chemical resistance (2) | |
|---|---|---|---|
| | | TCP | ENK |
| Example 9 | 1.9 | - | - |
| Example 10 | 2.2 | - | - |
| Example 11 | 2.0 | Δ | ○ |
| Example 12 | 1.8 | ○ | ○ |
| Example 13 | 0.5 | ○ | ○ |
| Comp. Example 6 | 3.0 | - | - |
| Comp. Example 7 | 0.3 | X | X |
| Comp. Example 8 | 0.4 | X | X |
| Comp. Example 9 | 0.4 | - | - |
| Comp. Example 10 | 53.8 | - | - |

The thermoplastic resin composition of the present invention described above is higher in deflection temperature under load, hence higher in heat resistance, than polyester resins, excels in chemical resistance in comparison with, for instance, polycarbonate resins, and also is low in haze and high in transparency, so that the present composition can be used very advantageously in applications where chemical resistance and heat resistance are required.

## Claims

1. A thermoplastic resin composition comprising:
a transparent aromatic thermoplastic resin (a) and
a copolymer polyester resin (b) comprising at least two kinds of dicarboxylic acid moieties and one kind of diol moiety, 1 to 50 mol% of the dicarboxylic acid moieties being a naphthalenedicarboxylic acid moiety,
the ratio of (a) to the combined amount of (a) and (b) being 50 to 99.99% by weight, and the ratio of (b) being 0.01 to 50% by weight.

2. The thermoplastic resin composition according to Claim 1,
wherein the transparent aromatic thermoplastic resin (a) is a polycarbonate resin.

3. The thermoplastic resin composition according to Claim 1 or 2, wherein the viscosity-average molecular weight of the transparent aromatic thermoplastic resin (a), as converted from the solution viscosity measured in methylene chloride at 25 °C, is 10,000 to 100,000.

4. The thermoplastic resin composition according to any one of Claims 1 to 3, wherein 2 to 40 mol% of the dicarboxylic acid moieties in the copolymer polyester resin (b) is a naphthalenedicarboxylic acid moiety.

5. The thermoplastic resin composition according to any one of Claims 1 to 4, wherein the dicarboxylic acid moiety other than naphthalenedicarboxylic acid in the copolymer polyester resin (b) comprises an aromatic dicarboxylic moiety.

6. The thermoplastic resin composition according to Claim 5, wherein the aromatic dicarboxylic acid is phthalic acid, isophthalic acid and/or terephthalic acid.

7. The thermoplastic resin composition according to any one of Claims 1 to 6, wherein the diol moiety in the copolymer polyester resin (b) comprises an aliphatic diol moiety.

8. The thermoplastic resin composition according to Claim 7, wherein the aliphatic diol is ethylene glycol or 1,4-butanediol.

9. The thermoplastic resin composition according to any one of Claims 1 to 8, wherein the intrinsic viscosity of the copolymer polyester resin (b), as measured in a tetrachloroethane/phenol (5/5) mixed solvent at 30 °C, is 0.3 to 2.0 dl/g.
